# EUROPÄISCHE PATENTSCHRIFT

(11) **EP 4 370 886 B1**
(45) Veröffentlichungstag und Bekanntmachung des Hinweises auf die Patenterteilung: **18.11.2026**
(21) Anmeldenummer: 22735895.9
(22) Anmeldetag: 27.06.2022
(51) Int. Cl.: G01K 7/42, G01K 13/024, H01M 8/00, H01M 8/0432, H01M 8/0438, H01M 8/04992

(54) **ANTRIEBSSYSTEM UND ERMITTLUNGSVERFAHREN ZUM ERMITTELN EINER TEMPERATUR IN EINEM DOSIERSYSTEM EINES ANTRIEBSSYSTEMS SOWIE TANKSYSTEM**
DRIVE SYSTEM AND DETERMINING METHOD FOR DETERMINING A TEMPERATURE IN A METERING SYSTEM OF A DRIVE SYSTEM AND TANK SYSTEM
SYSTÈME D'ENTRAÎNEMENT ET PROCÉDÉ DE DÉTERMINATION POUR DÉTERMINER UNE TEMPÉRATURE DANS UN SYSTÈME DE DOSAGE D'UN SYSTÈME D'ENTRAÎNEMENT AINSI QUE SYSTÈME DE RÉSERVOIR

(30) Priorität: 12.07.2021 DE 102021207351
(43) Veröffentlichungstag der Anmeldung: 22.05.2024
(73) Patentinhaber: Robert Bosch GmbH, 70442 Stuttgart (DE)
(72) Erfinder: FALKENAU, Tobias, 73732 Esslingen (DE); BOSCH, Timo, 71272 Renningen (DE)
(86) Internationale Anmeldenummer: PCT/EP2022/067489
(87) Internationale Veröffentlichungsnummer: WO 2023/285115

(56) Entgegenhaltungen:
- EP-A1- 3 174 146
- YANG J C ET AL: "Analysis of thermodynamic processes involving hydrogen", INTERNATIONAL JOURNAL OF HYDROGEN ENERGY, ELSEVIER, AMSTERDAM, NL, vol. 33, no. 16, 1 August 2008 (2008-08-01), pages 4413 - 4418, XP024528822, ISSN: 0360-3199, [retrieved on 20080813], DOI: 10.1016/J.IJHYDENE.2008.05.085

## Beschreibung

### Stand der Technik

Insbesondere in Fahrzeugen mit einem Wasserstoffantrieb wird Kraftstoff in Druckgasbehältern und/oder in einem kryogenen Zustand gespeichert.

In Druckgasbehältern liegt Kraftstoff gasförmig bei Drücken von bis zu 875 bar und Temperaturen zwischen -40 und 85 °C vor. In flüssiger Form bei Drücken bis zu 50 bar und Temperaturen bis zu -265°C vor.

Um Systemkomponenten eines Antriebssystems mit einem Energiewandler stromabwärts eines jeweiligen Druckgasbehälters zu schützen, muss eine Eintrittstemperatur von Kraftstoff in ein Dosiersystem zum Eindosieren von Gas aus einem jeweiligen Druckgastank in den Energiewandler in einem Temperaturbereich zwischen minimal -40 °C und 120 °C, idealerweise zwischen -20 °C und 95 °C, wie es bspw. in der Regelung UN/ECE R79 vorgegeben ist.

Weiterhin ist gesetzlich geregelt, dass Wasserstoffdruckgasbehälter in Kraftfahrzeugen je Tank einen Sensor für Tankdruck-und Temperatur aufweisen müssen und entsprechende Informationen über eine Kommunikationsschnittstelle bereitstellen, wie es bspw. in den Regelungen SAE J2579 und UN/ECE R79 vorgegeben ist.

Brennstoffzellensysteme oder Kraftstoffversorgungsysteme arbeiten mit Druck der niedriger ist als ein Druck in einem Druckgasbehälter. Bspw. arbeiten Brennstoffzellensysteme mit einem Druck zwischen 3 und 30 bar_g, wobei bar_g einen gegen einen Umgebungsdruck referenzierten Druck angibt.

Durch eine Zustandsänderung eines Gases bei einer Expansion des Gases von einem Druckgasbehälter zu einem Dosiersystem ändert sich die Temperatur des Gases.

EP 3 174 146 A1 beschreibt ein System und ein Verfahren zum Steuern eines Brennstoffzellensystems.

### Offenbarung der Erfindung

Im Rahmen der vorgestellten Erfindung werden ein Antriebssystem, ein Tanksystem und und ein Ermittlungsverfahren zum Ermitteln einer Temperatur in einem Dosiersystem eines Antriebssystems mit den Merkmalen der jeweiligen unabhängigen Patentansprüche vorgestellt. Weitere Merkmale und Details der Erfindung ergeben sich aus den jeweiligen Unteransprüchen, der Beschreibung und den Zeichnungen.

Die vorgestellte Erfindung dient dazu, eine Möglichkeit zum Ermitteln einer Temperatur in einem Dosiersystem eines Antriebssystems bereitzustellen. Insbesondere dient die vorgestellte Erfindung dazu, eine Temperatur eines aus einem Druckgastank oder mehreren Druckgastanks in ein Dosiersystem eines Antriebssystems eingeleiteten Gases ohne Verwendung eines Sensors oder mehreren Sensoren in dem Dosiersystem zu ermitteln.

In einem ersten Aspekt der vorgestellten Erfindung wird somit ein Antriebssystem zum Bereitstellen von Energie zum Antreiben einer Last vorgestellt. Das Antriebssystem umfasst einen Druckgastank mit einem Drucksensor und einem Temperatursensor, einen Energiewandler zum Umwandeln von Energie aus einem in dem Druckgastank gespeicherten Gas in Antriebsenergie, ein Dosiersystem zum Eindosieren von Gas aus dem Druckgastank in den Energiewandler und ein Kontrollgerät, das dazu konfiguriert ist, mittels eines mathematischen Modells, das eine isenthalpe Zustandsänderung von aus dem Druckgastank in das Dosiersystem strömendem Gas modelliert, eine Temperatur von in dem Dosiersystem strömendem Gas zu berechnen, wobei das Kontrollgerät weiterhin dazu konfiguriert ist, dem mathematischen Modell Messwerte, die mittels des Drucksensors und des Temperatursensors ermittelt wurden, als Eingangswerte bereitzustellen und wobei das Kontrollgerät weiterhin dazu konfiguriert ist, die berechnete Temperatur des in das Dosiersystem strömenden Gases einem Zusatzsystem bereitzustellen.

Unter einem Energiewandler ist im Kontext der vorgestellten Erfindung ein System zum Umwandeln von in einem Kraftstoff, wie bspw. Wasserstoff, gespeicherter potentieller Energie in Antriebsenergie zum Antreiben eines Fahrzeugs zu verstehen. Ein Energiewandler kann bspw. ein Brennstoffzellensystem oder eine Brennkraftmaschine, insbesondere ein Hubkolbenmotor oder ein Kreiskolbenmotor, sein.

Unter einem Dosiersystem ist im Kontext der vorgestellten Erfindung ein System zum Eindosieren bzw. Zuführen von Kraftstoff in einen Energiewandler zu verstehen. Ein Dosiersystem kann bspw. ein Einspritzsystem oder ein Anodensubsystem sein. Insbesondere umfasst ein Dosiersystem eine Dosierstrecke, in der aus einem Druckgastank ausströmender gasförmiger Kraftstoff expandiert, bevor der Kraftstoff dem jeweiligen Energiewandler zugeführt wird.

Unter einem Kontrollgerät ist im Kontext der vorgestellten Erfindung ein programmierbarer Schaltkreis, wie bspw. ein Prozessor oder ein ASIC zu verstehen. Bspw. kann ein Kontrollgerät ein Steuergerät eines Energiewandlers sein.

Das vorgestellte Antriebssystem basiert auf Messwerten, die von einem Temperatursensor und einem Drucksensor eines Druckgastanks des Antriebssystems bereitgestellt werden. Mittels dieser Messwerte wird eine Temperatur von in das Dosiersystem des Antriebssystems einströmendem Gas bzw. Kraftstoff ermittelt. Dazu werden die Messwerte in ein mathematisches Modell eingespeist, das von dem Kontrollgerät des vorgestellten Antriebssystems ausgeführt wird.

Das erfindungsgemäß vorgesehene mathematische Modell modelliert eine isenthalpe Zustandsänderung von aus dem Druckgastank in das Dosiersystem strömendem Gas. Dazu können in dem erfindungsgemäß vorgesehenen Kontrollgerät verschiedene Kennlinien von isenthalpen Zustandsänderungen für verschiedene Drücke bzw. verschiedene Temperaturen in dem Druckgastank hinterlegt sein, sodass, je nachdem wieviel Zeit vergangen bzw. wieviel Strecke zurückgelegt wurde, seitdem eine Menge Gas aus dem Druckgastank ausgetreten und in das Dosiersystem eingeströmt ist, eine entsprechende Temperatur des in dem Dosiersystem strömenden Gases bestimmt werden kann.

Alternativ oder zusätzlich zu jeweiligen Kennlinien kann das mathematische Modell eine mathematische Formel umfassen, die eine Veränderung der Temperatur eines Gases ausgehend von in dem Druckgastank ermittelten Messwerten des Drucks und der Temperatur, mathematisch abbildet. Entsprechend kann mittels der mathematischen Formel eine Temperatur des in dem Dosiersystem strömenden Gases bestimmt werden. Dabei kann die mathematische Formel bspw. Wärmeverluste über Leitungen und Oberflächen des Dosiersystems mathematisch abbilden.

Durch Verwendung des erfindungsgemäß vorgesehenen Kontrollgeräts zum Ermitteln einer Temperatur eines in dem Dosiersystem des vorgestellten Antriebssystems strömenden Gases kann auf fehleranfällige Sensorik in dem Dosiersystem verzichtet werden. Entsprechend ist das vorgestellte Antriebssystem besonders robust und verlässlich.

Sobald die Temperatur eines aktuell in dem Dosiersystem des vorgestellten Antriebssystems strömenden Gases bekannt ist bzw. von dem Kontrollgerät ermittelt wurde, kann die Temperatur einem Zusatzsystem, wie bspw. einem Zentralsteuergerät des Antriebssystems und/oder einer Anzeigeeinheit bereitgestellt werden.

Zum Bereitstellen einer jeweiligen ermittelten Temperatur kann das Kontrollgerät des vorgestellten Antriebssystems einen Wert der ermittelten Temperatur abrufbar in einem Speicher hinterlegen oder den Wert der ermittelten Temperatur über eine Kommunikationsschnittstelle an ein Zusatzsystem übertragen.

Es kann vorgesehen sein, dass der Energiewandler ein Brennstoffzellensystem ist.

Für den Fall, dass der Energiewandler ein Brennstoffzellensystem ist, kann eine jeweilige durch das Kontrollgerät ermittelte Temperatur in dem Dosiersystem, das dann bspw. ein Anodensubsystem ist, verwendet werden, um das Brennstoffzellensystem auf die Temperatur des Gases einzustellen bzw. eine Gaszufuhr so einzustellen, dass in dem Dosiersystem strömendes Gas eine vorgegebene Temperatur annimmt. Dazu kann bspw. ein Ventil des Druckgastanks entsprechend geöffnet oder geschlossen werden. Alternativ kann ein Ventil zum Einleiten von Gas aus dem Anodensubsystem in einen Brennstoffzellenstapel des Brennstoffzellensystems derart aktiviert bzw. deaktiviert werden, dass sich eine vorgegebene Temperatur in dem Anodensubsystem und/oder dem Brennstoffzellenstapel einstellt.

Alternativ oder zusätzlich kann eine Kühlmitteltemperatur oder ein Kühlmittelfluss von in dem Anodensubsystem strömendem Kühlmittel angepasst werden, um eine gewünschte Gastemperatur in dem Dosiersystem bzw. dem Anodensubsystem einzustellen.

Bei einer Verwendung von mehreren Druckgastanks kann vorgesehen sein, dass Einzeltanks mit zu hohen bzw. zu niedrigen Temperaturen oder Drücken, d.h. Temperaturen oder Drücken, die über oder unter einem vorgegebenen Schwellenwert liegen, von dem Dosiersystem getrennt bzw. abgeschaltet werden um einen weiteren Betrieb des vorgestellten Antriebssystems sicherzustellen.

Es kann weiterhin vorgesehen sein, dass der Energiewandler ein Verbrennungsmotor ist.

Für den Fall, dass der Energiewandler ein Verbrennungsmotor, wie bspw. ein Hubkolbenmotor oder ein Kreiskolbenmotor, der insbesondere zur Verbrennung von Wasserstoff konfiguriert ist, kann eine jeweilige durch das Kontrollgerät ermittelte Temperatur in dem Dosiersystem, das dann bspw. ein Einspritzsystem mit einem Zufuhrtrakt, wie bspw. einem sogenannten "Rail" ist, verwendet werden, um den Verbrennungsmotor auf die Temperatur des Gases einzustellen bzw. eine Gaszufuhr so einzustellen, dass in dem Einspritzsystem strömendes Gas eine vorgegebene Temperatur annimmt. Dazu kann bspw. ein Ventil des Druckgastanks entsprechend geöffnet oder geschlossen werden. Alternativ kann ein Ventil zum Einleiten von Gas aus dem Einspritzsystem in den Verbrennungsmotor derart aktiviert bzw. deaktiviert werden, dass sich eine vorgegebene Temperatur in dem Einspritzsystem und/oder dem Verbrennungsmotor einstellt.

Es kann weiterhin vorgesehen sein, dass die Last ein mechanisches System ist.

Das vorgestellte Antriebssystem eignet sich insbesondere zum Antreiben eines mechanischen Systems, wie bspw. einer Maschine, insbesondere einem Getriebe und/oder einer Mechanik zum Bewegen von Rädern eines Fahrzeugs.

Es kann weiterhin vorgesehen sein, dass das mathematische Modell einen Korrekturterm umfasst, der einen Einfluss eines Druckminderers und/oder eines Zufuhrkanals zum Zuführen von Gas aus dem Druckgastank zu dem Energiewandler mathematisch abbildet.

Um eine Varianz durch einen Einfluss einer Komponente, wie bspw. einem Druckminderer und/oder einem Zufuhrkanal, wie bspw. eine Form und/oder ein Material des Druckminderers und/oder des Zufuhrkanals auf die Temperatur von in dem Dosiersystem des vorgestellten Antriebssystems strömendem Gas zu minimieren, eignet sich ein mathematischer Korrekturterm, der bspw. in Laborversuchen mittels experimenteller Messungen spezifisch für einen jeweiligen Druckminderer und/oder Zufuhrkanal ermittelt wird.

Es kann weiterhin vorgesehen sein, dass ein Bereich zwischen dem Druckgastank und dem Energiewandler drucksensorfrei und temperatursensorfrei ist.

Durch einen drucksensorfreien bzw. temperatursensorfreien Bereich zwischen dem Druckgastank und dem Energiewandler des vorgestellten Antriebssystems kann auf fehleranfällige Sensoren verzichtet werden und eine besonders hohe Standzeit des Antriebssystems erreicht werden.

Um einen Einfluss von mehreren Druckgastanks auf das vorgestellte Antriebssystem abzubilden und an jeweilige Zusatzsysteme zu melden, hat sich ein Mittelungsprozess, bei dem an jeweiligen Druckgastanks ermittelte Messwerte gemittelt werden, als geeignet erwiesen. Alternativ kann vorgesehen sein, dass lediglich die Messwerte von dem Kontrollgerät verwendet werden, die von einem aktuell zur Kraftstoffversorgung des Dosiersystems verwendeten Tank oder einem vorgegebenen bzw. gemäß einem vorgegebenen Kriterienkatalog automatisch ausgewählten Mastertank ermittelt wurden.

In einem zweiten Aspekt betrifft die vorgestellte Erfindung ein Ermittlungsverfahren zum Ermitteln einer Temperatur in einem Dosiersystem eines Antriebssystems. Das Antriebssystem umfasst einen Druckgastank mit einem Drucksensor und einem Temperatursensor, einen Energiewandler zum Umwandeln von Energie aus einem in dem Druckgastank gespeicherten Gas in Antriebsenergie und ein Dosiersystem zum Eindosieren von Gas aus dem Druckgastank in den Energiewandler. Das Ermittlungsverfahren umfasst einen Ermittlungsschritt, bei dem ein Druck und eine Temperatur in dem Druckgastank ermittelt werden, einen Modellierungsschritt, bei dem eine isenthalpe Zustandsänderung von aus dem Druckgastank in das Dosiersystem strömendem Gas mittels eines mathematischen Modells modelliert wird und einen Berechnungsschritt, bei dem eine Temperatur des in das Dosiersystem strömenden Gases mittels des mathematischen Modells berechnet wird, einen Bereitstellungsschritt zum Bereitstellen der berechneten Temperatur des in das Dosiersystem strömenden Gases für ein Zusatzsystem.

Eine Ausgestaltung betrifft ein Fahrzeug mit einer möglichen Ausgestaltung des vorgestellten Antriebssystems.

In einem dritten Aspekt betrifft die vorgestellte Erfindung ein Tanksystem zum Bereitstellen eines Gases in ein Dosiersystem eines Energiewandlers, wobei das Tanksystem einen Druckgastank mit einem Drucksensor und einem Temperatursensor und ein Kontrollgerät umfasst. Das Kontrollgerät ist dazu konfiguriert, mittels eines mathematischen Modells, das eine isenthalpe Zustandsänderung von aus dem Druckgastank in das Dosiersystem des Energiewandlers strömendem Gas modelliert, eine Temperatur von in dem Dosiersystem strömenden Gas zu berechnen. Das Kontrollgerät ist weiterhin dazu konfiguriert, dem mathematischen Modell Messwerte, die mittels des Drucksensors und des Temperatursensors ermittelt wurden, als Eingangswerte bereitzustellen. Das Kontrollgerät ist weiterhin dazu konfiguriert, die berechnete Temperatur des in das Dosiersystem strömenden Gases einem Zusatzsystem bereitzustellen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen:
Figur 1 eine schematische Darstellung einer möglichen Ausgestaltung des vorgestellten Antriebssystems,
Figur 2 eine schematische Darstellung eines mathematischen Modells, das von einem Kontrollgerät des Antriebssystems gemäß Figur 1 verwendet wird,
Figur 3 eine schematische Ausgestaltung des vorgestellten Ermittlungsverfahrens,
Figur 4 eine schematische Darstellung einer möglichen Ausgestaltung des vorgestellten Fahrzeugs,
Figur 5 eine schematische Darstellung einer möglichen Ausgestaltung des vorgestellten Tanksystems.

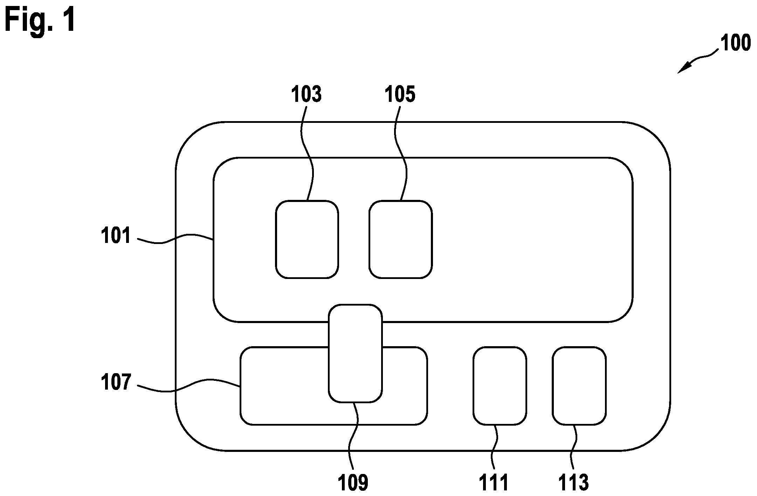

In Figur 1 ist ein Antriebssystem 100 dargestellt. Das Antriebssystem 100 umfasst einen Druckgastank 101 mit einem Drucksensor 103 und einem Temperatursensor 105.

Weiterhin umfasst das Antriebssystem 100 einen Energiewandler 107 zum Umwandeln von Energie aus einem in dem Druckgastank gespeicherten Gas in Antriebsenergie.

Weiterhin umfasst das Antriebssystem 100 ein Dosiersystem 109 zum Eindosieren von Gas aus dem Druckgastank 101 in den Energiewandler 107.

Weiterhin umfasst das Antriebssystem 100 ein Kontrollgerät 111. Das Kontrollgerät 111 ist dazu konfiguriert, mittels eines mathematischen Modells, das eine isenthalpe Zustandsänderung von aus dem Druckgastank 101 in das Dosiersystem 109 strömendem Gas zu modellieren, um eine Temperatur von in dem Dosiersystem 109 strömendem Gas zu berechnen.

Das Kontrollgerät 111 ist weiterhin dazu konfiguriert, Messwerte, die mittels des Drucksensors 103 und des Temperatursensors 105 ermittelt wurden, dem mathematischen Modell als Eingangswerte bereitzustellen.

Das Kontrollgerät 111 ist weiterhin dazu konfiguriert, die berechnete Temperatur des in das Dosiersystem 109 strömenden Gases einem Zusatzsystem 113, wie bspw. einer Anzeige oder einem Zentralsteuergerät zum Steuern des Energiewandlers 107 bereitzustellen.

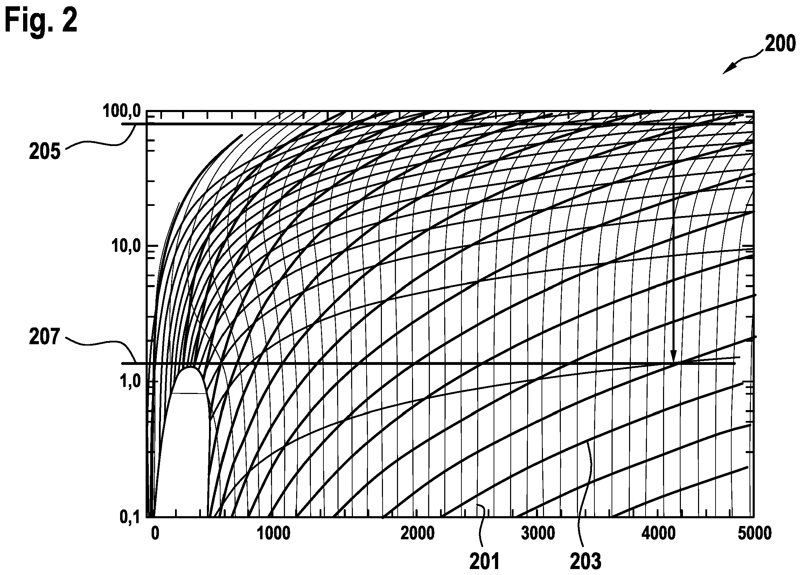

In Figur 2 ist ein mathematisches Modell 200 visualisiert. Das Modell 200 umfasst eine Vielzahl von Kennlinien in Form von Isothermen 201 und Isentropen 203, anhand derer von einem ersten Zustand, dargestellt durch einen ersten Bereich 205, wie bspw. in einem Druckgastank, auf einen zweiten Zustand, dargestellt durch einen zweiten Bereich 207, wie bspw. in einem Dosiersystem, geschlossen werden kann. Da der Druck in einem Dosiersystem in der Regel bekannt ist, kann anhand des bekannten Drucks auf eine Temperatur zu dem zweiten Zustand, also in dem Drucksystem geschlossen werden, wenn die Ausgangstemperatur zu dem ersten Zustand, also in dem Druckgastank bekannt ist.

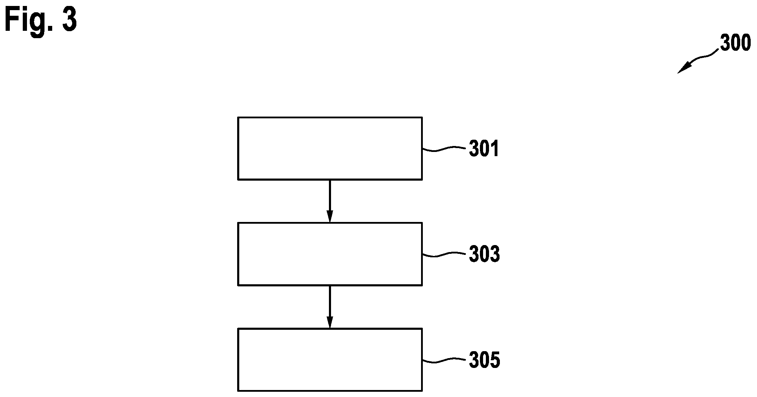

In Figur 3 ist ein Ermittlungsverfahren 300 zum Ermitteln einer Temperatur in einem Dosiersystem eines Antriebssystems, wie bspw. dem Antriebssystem 100 gemäß Figur 1, dargestellt.

Das Ermittlungsverfahren 300 umfasst einen Ermittlungsschritt 301, bei dem ein Druck und eine Temperatur in dem Druckgastank ermittelt werden, einen Modellierungsschrittschritt 303, bei dem eine isenthalpe Zustandsänderung von aus dem Druckgastank in das Dosiersystem strömendem Gas mittels eines mathematischen Modells modelliert wird und einen Berechnungsschritt 305, bei dem eine Temperatur des in das Dosiersystem strömenden Gases mittels des mathematischen Modells berechnet wird und einen Bereitstellungsschritt 307 zum Bereitstellen der berechneten Temperatur des in das Dosiersystem strömenden Gases für ein Zusatzsystem.

In dem Modellierungsschritt 303 werden in dem Ermittlungsschritt 301 ermittelte Messwerte in das mathematische Modell eingegeben und Modellparameter spezifiziert, wie bspw. eine jeweilige Kennlinie und/oder ein jeweiliger Korrekturterm ausgewählt.

In dem Berechnungsschritt 305 werden die in dem Modellierungsschritt ausgewählten Modellparameter zur Berechnung angewendet und eine Temperatur berechnet.

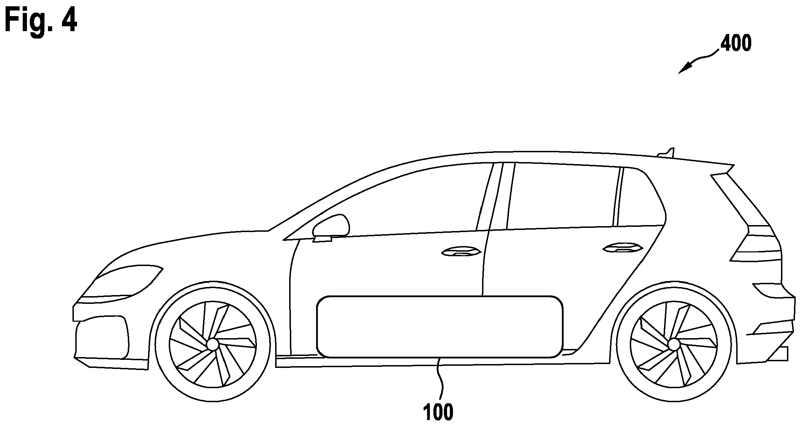

In Figur 4 ist ein Fahrzeug 400 dargestellt. Das Fahrzeug 400 umfasst ein Antriebssystem 100 gemäß Figur 1.

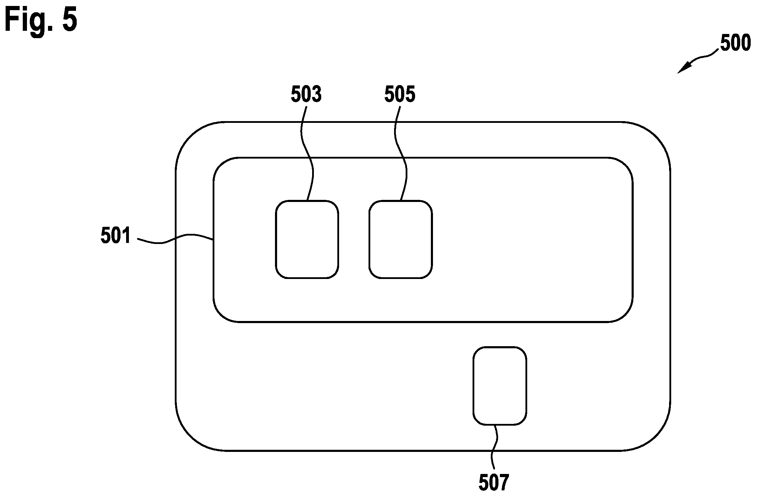

In Figur 5 ist ein Tanksystem 500 dargestellt. Das Tanksystem 500 umfasst - einen Druckgastank 501 mit einem Drucksensor 503 und einem Temperatursensor 505 sowie ein Kontrollgerät 507.

Das Kontrollgerät 507 ist dazu konfiguriert, mittels eines mathematischen Modells, das eine isenthalpe Zustandsänderung von aus dem Druckgastank in ein Dosiersystem eines von dem Tanksystem 500 mit Kraftstoff versorgten Dosiersystem eines Energiewandlers strömendem Gases zu modellieren und eine Temperatur von in dem Dosiersystem strömenden Gas zu berechnen.

Weiterhin ist das Kontrollgerät 507 dazu konfiguriert, dem mathematischen Modell Messwerte, die mittels des Drucksensors 501 und des Temperatursensors 503 ermittelt wurden, als Eingangswerte bereitzustellen und die berechnete Temperatur des in das Dosiersystem strömenden Gases einem Zusatzsystem bereitzustellen.

## Patentansprüche

1. Antriebssystem (100) zum Bereitstellen von Energie zum Antreiben einer Last,
wobei das Antriebssystem (100) umfasst:
- einen Druckgastank (101) mit einem Drucksensor (103) und einem Temperatursensor (105),
- einen Energiewandler (107) zum Umwandeln von Energie aus einem in dem Druckgastank (101) gespeicherten Gas in Antriebsenergie,
- ein Dosiersystem (109) zum Eindosieren von Gas aus dem Druckgastank (101) in den Energiewandler (107),
- wobei
- ein Kontrollgerät (111) vorhanden ist, das dazu konfiguriert ist, mittels eines mathematischen Modells (200), das eine isenthalpe Zustandsänderung von aus dem Druckgastank (101) in das Dosiersystem (109) strömendem Gas modelliert, eine Temperatur von in dem Dosiersystem (109) strömendem Gas zu berechnen,
wobei das Kontrollgerät (111) weiterhin dazu konfiguriert ist, dem mathematischen Modell (200) Messwerte, die mittels des Drucksensors (103) und/oder des Temperatursensors (105) ermittelt wurden, als Eingangswerte bereitzustellen,
wobei das Kontrollgerät (111) weiterhin dazu konfiguriert ist, die berechnete Temperatur des in das Dosiersystem (109) strömenden Gases einem Zusatzsystem bereitzustellen.

2. Antriebssystem (100) nach Anspruch 1,
**dadurch gekennzeichnet,**
**dass** der Energiewandler (107) ein Brennstoffzellensystem ist.

3. Antriebssystem (100) nach Anspruch 1,
**dadurch gekennzeichnet,**
**dass** der Energiewandler (107) ein Verbrennungsmotor ist.

4. Antriebssystem (100) nach einem der voranstehenden Ansprüche,
dadurch gekenzeichnet,
dass die Last ein mechanisches System ist.

5. Antriebssystem (100) nach einem der voranstehenden Ansprüche
**dadurch gekennzeichnet,**
**dass** das mathematische Modell (200) einen Korrekturterm umfasst, der einen Einfluss eines Druckminderers und/oder eines Zufuhrkanals zum Zuführen von Gas aus dem Druckgastank (101) zu dem Energiewandler (107) mathematisch abbildet.

6. Antriebssystem (100) nach einem der voranstehenden Ansprüche,
**dadurch gekennzeichnet,**
**dass** ein Bereich zwischen dem Druckgastank (101) und dem Energiewandler (107) drucksensorfrei und temperatursensorfrei ist.

7. Antriebssystem (100) nach einem der voranstehenden Ansprüche,
**dadurch gekennzeichnet,**
**dass** das mathematische Modell (200) eine Kennlinie einer isenthalpen Zustandsänderung eines jeweiligen Gases umfasst.

8. Ermittlungsverfahren (300) zum Ermitteln einer Temperatur in einem Dosiersystem (109) eines Antriebssystems (100),
wobei das Antriebssystem (100) umfasst:
- einen Druckgastank (101) mit einem Drucksensor (103) und einem Temperatursensor (105),
- einen Energiewandler (107) zum Umwandeln von Energie aus einem in dem Druckgastank (101) gespeicherten Gas in Antriebsenergie,
- ein Dosiersystem (109) zum Eindosieren von Gas aus dem Druckgastank (101) in den Energiewandler (107),
wobei das Ermittlungsverfahren (300) umfasst:
einen Ermittlungsschritt (301), bei dem durch den Drucksensor (103) Messwerte eines Drucks und durch den Temperatursensor (105) Messwerte einer Temperatur in dem Druckgastank (101) ermittelt werden, einen Modellierungsschrittschritt (303), bei dem eine isenthalpe Zustandsänderung von aus dem Druckgastank (101) in das Dosiersystem (109) strömendem Gas mittels eines mathematischen Modells (200) modelliert wird,
einen Berechnungsschritt (305), bei dem eine Temperatur des in das Dosiersystem (109) strömenden Gases mittels des mathematischen Modells (200) berechnet wird,
einen Bereitstellungsschritt (307) zum Bereitstellen der berechneten Temperatur des in das Dosiersystem (109) strömenden Gases für ein Zusatzsystem,
wobei dem mathematischen Modell (200) durch den Drucksensor (103) und den Temperatursensor (105) ermittelte Messwerte als Eingangswerte bereitgestellt werden.

9. Fahrzeug (400) mit einem Antriebssystem (100) nach einem der Ansprüche 1 bis 7.

10. Tanksystem (500) zum Bereitstellen eines Gases in ein Dosiersystem (109) eines Energiewandlers (107),
wobei das Tanksystem (500) umfasst:
- einen Druckgastank (501) mit einem Drucksensor (503) und einem Temperatursensor (505), und
- ein Kontrollgerät (507),
wobei das Kontrollgerät (507) dazu konfiguriert ist, mittels eines mathematischen Modells (200), das eine isenthalpe Zustandsänderung von aus dem Druckgastank in das Dosiersystem (109) des Energiewandlers (107) strömendem Gas modelliert, eine Temperatur von in dem Dosiersystem (109) strömenden Gas zu berechnen,
wobei das Kontrollgerät (507) weiterhin dazu konfiguriert ist, dem mathematischen Modell (200) Messwerte, die mittels des Drucksensors (503) und des Temperatursensors (505) ermittelt wurden, als Eingangswerte bereitzustellen,
wobei das Kontrollgerät (507) weiterhin dazu konfiguriert ist, die berechnete Temperatur des in das Dosiersystem (109) strömenden Gases einem Zusatzsystem bereitzustellen.

## Claims

1. Drive system (100) for providing energy for driving a load,
wherein the drive system (100) comprises:
- a compressed gas tank (101) with a pressure sensor (103) and a temperature sensor (105),
- an energy converter (107) for converting energy from a gas stored in the compressed gas tank (101) into drive energy,
- a metering system (109) for metering gas from the compressed gas tank (101) into the energy converter (107),
- wherein
- a control device (111) is present, which is configured to calculate a temperature of gas flowing in the metering system (109) by means of a mathematical model (200), which models an isenthalpic change in state of gas flowing from the compressed gas tank (101) into the metering system (109),
wherein the control device (111) is further configured to provide measured values, which were determined by means of the pressure sensor (103) and/or the temperature sensor (105), to the mathematical model (200) as input values,
wherein the control device (111) is further configured to provide the calculated temperature of the gas flowing into the metering system (109) to a supplementary system.

2. Drive system (100) according to Claim 1,
**characterized**
**in that** the energy converter (107) is a fuel cell system.

3. Drive system (100) according to Claim 1,
**characterized**
**in that** the energy converter (107) is an internal combustion engine.

4. Drive system (100) according to any of the preceding claims,
**characterized**
**in that** the load is a mechanical system.

5. Drive system (100) according to any of the preceding claims,
**characterized**
**in that** the mathematical model (200) comprises a correction term which mathematically represents an influence of a pressure reducer and/or a supply channel for supplying gas from the compressed gas tank (101) to the energy converter (107).

6. Drive system (100) according to any of the preceding claims,
**characterized**
**in that** a region between the compressed gas tank (101) and the energy converter (107) is free of pressure sensors and temperature sensors.

7. Drive system (100) according to any of the preceding claims,
**characterized**
**in that** the mathematical model (200) comprises a characteristic curve of an isenthalpic change in state of a respective gas.

8. Determination method (300) for determining a temperature in a metering system (109) of a drive system (100),
wherein the drive system (100) comprises:
- a compressed gas tank (101) with a pressure sensor (103) and a temperature sensor (105),
- an energy converter (107) for converting energy from a gas stored in the compressed gas tank (101) into drive energy,
- a metering system (109) for metering gas from the compressed gas tank (101) into the energy converter (107),
wherein the determination method (300) comprises:
a determination step (301), in which measured values of a pressure are determined by the pressure sensor (103) and measured values of a temperature in the compressed gas tank (101) are determined by the temperature sensor (105), a modelling step (303), in which an isenthalpic change in state of gas flowing from the compressed gas tank (101) into the metering system (109) is modelled by means of a mathematical model (200),
a calculation step (305), in which a temperature of the gas flowing into the metering system (109) is calculated by means of the mathematical model (200),
a provision step (307) for providing the calculated temperature of the gas flowing into the metering system (109) for a supplementary system,
wherein measured values determined by the pressure sensor (103) and the temperature sensor (105) are provided to the mathematical model (200) as input values.

9. Vehicle (400) comprising a drive system (100) according to any of Claims 1 to 7.

10. Tank system (500) for providing a gas to a metering system (109) of an energy converter (107),
wherein the tank system (500) comprises:
- a compressed gas tank (501) with a pressure sensor (503) and a temperature sensor (505), and
- a control device (507),
wherein the control device (507) is configured to calculate a temperature of gas flowing in the metering system (109) by means of a mathematical model (200), which models an isenthalpic change in state of gas flowing from the compressed gas tank into the metering system (109) of the energy converter (107),
wherein the control device (507) is further configured to provide measured values, which were determined by means of the pressure sensor (503) and the temperature sensor (505), to the mathematical model (200) as input values,
wherein the control device (507) is further configured to provide the calculated temperature of the gas flowing into the metering system (109) to a supplementary system.

## Revendications

1. Système d'entraînement (100) pour fournir de l'énergie pour entraîner une charge,
le système d'entraînement (100) comprenant :
- un réservoir de gaz comprimé (101) avec un capteur de pression (103) et un capteur de température (105),
- un convertisseur d'énergie (107) pour convertir l'énergie provenant d'un gaz stocké dans le réservoir de gaz comprimé (101) en énergie d'entraînement,
- un système de dosage (109) pour injecter du gaz provenant du réservoir de gaz comprimé (101) dans le convertisseur d'énergie (107),
- un appareil de contrôle (111) étant présent, qui est configuré pour calculer une température de gaz circulant dans le système de dosage (109) au moyen d'un modèle mathématique (200), qui modélise le changement d'état isenthalpique du gaz circulant depuis le réservoir de gaz comprimé (101) dans le système de dosage (109),
l'appareil de contrôle (111) étant par ailleurs configuré pour fournir au modèle mathématique (200) des valeurs de mesure, qui ont été déterminées au moyen du capteur de pression (103) et/ou du capteur de température (105), en tant que valeurs d'entrée,
l'appareil de contrôle (111) étant par ailleurs configuré pour fournir à un système supplémentaire la température calculée du gaz circulant dans le système de dosage (109).

2. Système d'entraînement (100) selon la revendication 1,
**caractérisé en ce**
**que** le convertisseur d'énergie (107) est un système de pile à combustible.

3. Système d'entraînement (100) selon la revendication 1,
**caractérisé en ce**
**que** le convertisseur d'énergie (107) est un moteur à combustion interne.

4. Système d'entraînement (100) selon l'une des revendications précédentes,
**caractérisé en ce**
**que** la charge est un système mécanique.

5. Système d'entraînement (100) selon l'une des revendications précédentes,
**caractérisé en ce**
**que** le modèle mathématique (200) comprend un terme de correction qui reproduit mathématiquement une incidence d'un réducteur de pression et/ou d'un canal d'arrivée destiné à amener du gaz provenant du réservoir de gaz comprimé (101) vers le convertisseur d'énergie (107).

6. Système d'entraînement (100) selon l'une des revendications précédentes,
**caractérisé en ce**
**qu'**une zone entre le réservoir de gaz comprimé (101) et le convertisseur d'énergie (107) est exempte de capteur de pression et de capteur de température.

7. Système d'entraînement (100) selon l'une des revendications précédentes,
**caractérisé en ce**
**que** le modèle mathématique (200) comprend une courbe caractéristique d'un changement d'état isenthalpique d'un gaz respectif.

8. Procédé de détermination (300) pour déterminer une température dans un système de dosage (109) d'un système d'entraînement (100),
le système d'entraînement (100) comprenant :
- un réservoir de gaz comprimé (101) avec un capteur de pression (103) et un capteur de température (105),
- un convertisseur d'énergie (107) pour convertir l'énergie provenant d'un gaz stocké dans le réservoir de gaz comprimé (101) en énergie d'entraînement,
- un système de dosage (109) pour injecter du gaz provenant du réservoir de gaz comprimé (101) dans le convertisseur d'énergie (107),
le procédé de détermination (300) comprenant :
une étape de recherche (301), dans laquelle le capteur de pression (103) permet de déterminer des valeurs de mesure d'une pression et le capteur de température (105) permet de déterminer des valeurs de mesure d'une température dans le réservoir de gaz comprimé (101), une étape de modélisation (303), dans laquelle un changement d'état isenthalpique du gaz circulant depuis le réservoir de gaz comprimé (101) dans le système de dosage (109) est modélisé au moyen d'un modèle mathématique (200),
une étape de calcul (305), dans laquelle une température du gaz circulant dans le système de dosage (109) est calculée au moyen du modèle mathématique (200),
une étape de fourniture (307) pour fournir la température calculée du gaz circulant dans le système de dosage (109) pour un système supplémentaire,
des valeurs de mesure déterminées par le capteur de pression (103) et le capteur de température (105) étant fournies au modèle mathématique (200) en tant que valeurs d'entrée.

9. Véhicule (400) avec un système d'entraînement (100) selon l'une des revendications 1 à 7.

10. Système de réservoir (500) destiné à fournir un gaz dans un système de dosage (109) d'un convertisseur d'énergie (107),
le système de réservoir (500) comprenant :
- un réservoir de gaz comprimé (501) avec un capteur de pression (503) et un capteur de température (505), et
- un appareil de contrôle (507),
l'appareil de contrôle (507) étant configuré pour calculer une température de gaz circulant dans le système de dosage (200) au moyen d'un modèle mathématique (109), qui modélise un changement d'état isenthalpique du gaz circulant depuis le réservoir de gaz comprimé dans le système de dosage (109) du convertisseur d'énergie (107),
l'appareil de contrôle (507) étant par ailleurs configuré pour fournir au modèle mathématique (200) des valeurs de mesure, qui ont été déterminées au moyen du capteur de pression (503) et du capteur de température (505), en tant que valeurs d'entrée,
l'appareil de contrôle (507) étant par ailleurs configuré pour fournir à un système supplémentaire la température calculée du gaz circulant dans le système de dosage (109).
